# EUROPÄISCHE PATENTSCHRIFT

(11) **EP 1 521 005 B1**
(45) Veröffentlichungstag und Bekanntmachung des Hinweises auf die Patenterteilung: **23.04.2008**
(21) Anmeldenummer: 04104616.0
(22) Anmeldetag: 23.09.2004
(51) Int. Cl.: F16D 25/10, F16D 21/06, F16D 27/12

(54) **Kupplungs- und/oder Bremseinheit**
Clutch and/or brake unit
Unité d'embrayage et/ou de frein

(30) Priorität: 30.09.2003 DE 10345321
(43) Veröffentlichungstag der Anmeldung: 06.04.2005
(73) Patentinhaber: DEERE & COMPANY, Moline, Illinois 61265-8098 (US)
(72) Erfinder: Buhrke, Frank, 69469 Weinheim (DE)
(74) Vertreter: Holst, Sönke

(56) Entgegenhaltungen:
- EP-A1- 1 052 421
- EP-A2- 1 174 632
- WO-A-01/42673
- DE-A1- 1 475 278
- DE-A1- 4 332 466

## Beschreibung

Die Erfindung betrifft eine Kupplungs- und/oder Bremseinheit mit wenigstens drei relativ zueinander verdrehbaren Bauteilen, mit denen jeweils wenigstens eine Lamelle drehfest verbunden ist, wobei die Lamellen wahlweise miteinander in reibenden kraftschlüssigen Eingriff gebracht werden können.

Herkömmliche Kupplungs- und/oder Bremseinheiten sind mit einem Lamellenträger ausgestattet, auf dem sich mindestens eine Lamelle für eine äußere Kupplungs- und/oder Bremseinheit und mindestens eine weitere Lamelle für eine innere Kupplungsund/oder Bremseinheit befindet. Die innere und die äußere Lamelle sind meistens mittels Spline-Verzahnung mit einem Lamellenträger verbunden. Es sind somit für zwei Kupplungsund/oder Bremseinheiten zwei unterschiedliche Lamellen erforderlich, die drehfest mit einem Bauteil, dem Lamellenträger, verbunden sind.

Dokument WO 01/42673, das als nächstliegender Stand der Technik gesehen wird, offenbart eine derartige Kupplungs- und Bremseinheit.

Die der Erfindung zugrunde liegende Aufgabe wird darin gesehen, ein Kupplungs- und/oder Bremseinheit der eingangs genannten Art anzugeben, die einen vereinfachten Aufbau aufweist und sich einfach und kostengünstig herstellen lässt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Die erfindungsgemäße Kupplungs- und/oder Bremseinheit enthält wenigstens drei relativ zueinander verdrehbare Bauteile, mit denen jeweils wenigstens eine Lamelle drehfest verbunden ist. Die Lamellen können wahlweise miteinander in reibenden kraftschlüssigen Eingriff gebracht werden. Die Erfindung zeichnet sich durch ein sogenanntes Einscheiben-Design aus. Dieses ist dadurch gekennzeichnet, dass mit dem ersten Bauteil wenigstens eine erste Lamelle drehfest verbunden ist, welche über wenigstens einen radial äußeren Reibbelag mit wenigstens einer zweiten drehfest mit dem zweiten Bauteil verbundenen Lamelle in reibenden Eingriff gebracht werden kann, und welche über wenigstens einen radial inneren Reibbelag mit wenigstens einer dritten drehfest mit dem dritten Bauteil verbundenen Lamelle in reibenden Eingriff gebracht werden kann.

Die erfindungsgemäße Kupplungs- und/oder Bremseinheit hat einen einfachen Aufbau, da anstelle je einer sonst üblichen inneren und äußeren Lamelle nunmehr lediglich eine einzige Lamelle erforderlich ist, die sowohl einer inneren Kupplungs- und/oder Bremseinheit als auch einer äußeren Kupplungs- und/oder Bremseinheit zugeordnet ist. Diese Ausbildung führt zu einer vereinfachten und kostengünstig herstellbaren Konstruktion. Es ist von Vorteil, die wenigstens eine Lamelle eben und scheibenförmig auszubinden.

Die Erfindung eignet sich nicht nur für Kupplungs- und/oder Bremseinheit mit einer einzigen ersten Lamelle, die mit zweiten und dritten Lamellen zusammenwirkt. Vielmehr ist sie auch bei Mehrscheiben-Kupplungen und Bremsen anwendbar, wobei wenigstens ein Bauteil mit einem Lamellenpaket verbunden ist, welches die jeweilige wenigstens eine Lamelle umfasst. Mit anderen Worten: die wenigstens eine erste Lamelle ist Element eines ersten Lamellenpakets und/oder die wenigstens eine zweite bzw. dritte Lamelle ist Element eines zweiten bzw. dritten Lamellenpakets. Durch die Verwendung eines Lamellenpaketes anstelle einer Einscheibenausführung lässt sich bei gleicher Drehmomentauslegung eine in radialer Hinsicht kleinere Baueinheit realisieren.

Der Reibeingriff (Kupplung oder Bremse) zwischen der wenigstens einen ersten Lamelle bzw. dem ersten Lamellenpaket und der wenigstens einen zweiten Lamelle bzw. dem zweiten Lamellenpaket sowie der Reibeingriff (Kupplung oder Bremse) zwischen der wenigstens einen ersten Lamelle bzw. dem ersten Lamellenpaket und der wenigstens einen dritten Lamelle bzw. dem dritten Lamellenpaket erfolgt vorzugsweise durch mechanische Betätigung (z. B. durch Hebel, Kugelrampenprinzip, Keil usw.), durch hydraulische Betätigung (z. B. mittels eines Kolbens), durch pneumatische Betätigung (z. B. mittels eines Kolbens) oder durch elektrische Betätigung (z. B. unter Verwendung eines Elektromotors).

Des Weiteren werden die Lamellen bzw. die Lamellenpakete zweckmäßiger Weise mit Hilfe einer Scheibenkupplung geklemmt, so dass ein Drehmoment übertragen wird.

Die beiden Reibeingriffe lassen sich unabhängig voneinander schalten. Elemente wenigstens eines der beiden Reibeingriffe sollten axial verschiebbar sein, um ein Verkanten der Lamellen bei gleichzeitiger Betätigung beider Reibeingriffe zu vermeiden, sowie um auch einen unterschiedlichen Verschleiß der auf den Lamellen aufgebrachten Reibbeläge auszugleichen.

Durch die erfindungsgemäße Anordnung ergeben sich insbesondere folgende Verbindungsmöglichkeiten zwischen den Bauteilen:

Bei einem auf einer drehbaren Welle montierten ersten treibenden Bauteil lässt sich das erste Bauteil mit dem zweiten Bauteil oder mit dem dritten Bauteil oder sowohl mit dem zweiten Bauteil als auch mit dem dritten Bauteil verbinden. Bei einem auf einer drehbaren Welle montierten zweiten treibenden Bauteil lässt sich das zweite Bauteil mit dem ersten Bauteil oder sowohl mit dem ersten Bauteil als auch mit dem dritten Bauteil verbinden. Bei einem auf einer drehbaren Welle montierten dritten treibenden Bauteil lässt sich das dritte Bauteil mit dem ersten Bauteil oder sowohl mit dem ersten Bauteil als auch mit dem zweiten Bauteil verbinden.

Eine besonders bevorzugte Weiterbildung der Erfindung sieht vor, dass das erste Bauteil ein Lamellenträger mit wenigstens einem, vorzugsweise mit wenigstens zwei axial vorstehenden Stegen (Mitnehmern) ist, die in entsprechende Ausnehmungen der wenigstens einen ersten Lamelle eingreifen. Dabei kann das erste Bauteil (Lamellenträger) mit den Stegen ein- oder auch mehrteilig ausgeführt sein.

Die Stege des ersten Bauteils (Lamellenträgers) können auf unterschiedliche Weise ausgeführt sein. So ist es aus Fertigungsgründen vorteilhaft die Stege im Wesentlichen zylindrisch auszubilden, wobei die Stege in Kreisöffnungen der wenigstens einen ersten Lamelle eingreifen. Es sind jedoch auch andere formschlüssige Verbindungen zwischen Lamellenträger und Lamelle denkbar (z. B. Kreissegmente als Mitnehmer).

Wenn die Lamelle mit Bohrungen bzw. Ausstanzungen versehen ist, können die Stege des ersten Bauteils (Lamellenträger) durch diese Bohrungen bzw. Ausstanzungen treten, so dass die Lamelle formschlüssig mit dem ersten Bauteil verbunden ist. Bei dieser Ausgestaltung ergibt sich eine relativ einfache Bearbeitung der Stege des ersten Bauteils sowie der Ausnehmungen (Bohrungen /Ausstanzungen) der Lamelle. Dies ermöglicht eine kostengünstige Ausbildung einer Wellen-Nabe-Verbindung, die der Drehmomentübertragung dient. Bei Lamellenträger und Lamelle ist nur eine Welle-Nabe-Verbindung notwendig. Es ist eine einfache Montage des ersten Bauteils möglich, welche gegebenenfalls auch mit einer Klauenkupplung zum Trennen zwischen Träger und Lamelle verwendet werden kann.

Vorzugsweise liegen der wenigstens eine radial äußere Reibbelag radial außerhalb der Stege (des Durchmesserbereichs auf dem die Stege angeordnet sind) und der wenigstens eine radial innere Reibbelag radial innerhalb der Stege.

Einer weiteren bevorzugten Ausgestaltung der Erfindung zufolge ist wenigstens eine Lamelle bezüglich des sie tragenden Bauteils axial verschiebbar. Insbesondere ist die wenigstens eine erste, zweite und/oder dritte Lamelle bzw. das erste, zweite und/oder dritte Lamellenpaket bezüglich des zugehörigen ersten, zweiten und/oder dritten Bauteils axial verschiebbar. Beispielsweise ist die erste Lamelle axial auf den Stegen des ersten Bauteils (Lamellenträger) verschiebbar.

Gemäß einer bevorzugten Ausgestaltung der Erfindung sind die wenigstens eine erste Lamelle ohne Reibbelag und die wenigstens eine zweite und dritte Gegenlamelle mit Reibbelägen ausgebildet. Alternativ hierzu kann es auch vorteilhaft sein, die wenigstens eine erste Lamelle mit einem durchgehenden Reibbelag (über die gesamte Lamellenseite) auszubilden. Gemäß einer weiteren vorteilhaften Ausgestaltung sind Bereiche mit unterschiedlichen Reibbelägen vorgesehen, um unterschiedliche Reibfaktoren zu ermöglichen. Gegebenenfalls können in den Lamellenoberflächen auch Nuten verlaufen, die in unterschiedlichen Oberflächenbereichen unterschiedlich ausgestaltet sind.

Vorzugsweise sind Bereiche unterschiedlicher Reibbeläge oder Nutgestaltung konzentrisch zueinander angeordnet.

Es kann vorteilhaft sein, wenn wenigstens eine Lamelle mit einem Bremssattel zusammenwirkt, durch welchen sich diese Lamelle und mit ihr das zugehörige Bauteil abbremsen und gegenüber einem Getriebegehäuse stillsetzen lässt.

Anhand der Zeichnung, die Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: die Querschnittsdarstellung einer ersten Ausgestaltung einer erfindungsgemäße Kupplungseinheit,
- Fig. 2: die Querschnittsdarstellung eines Teilbereichs einer zweiten Ausgestaltung einer erfindungsgemäßen Kupplungseinheit und
- Fig. 3: die Querschnittsansicht einer dritten Ausgestaltung einer erfindungsgemäßen Kupplungseinheit.

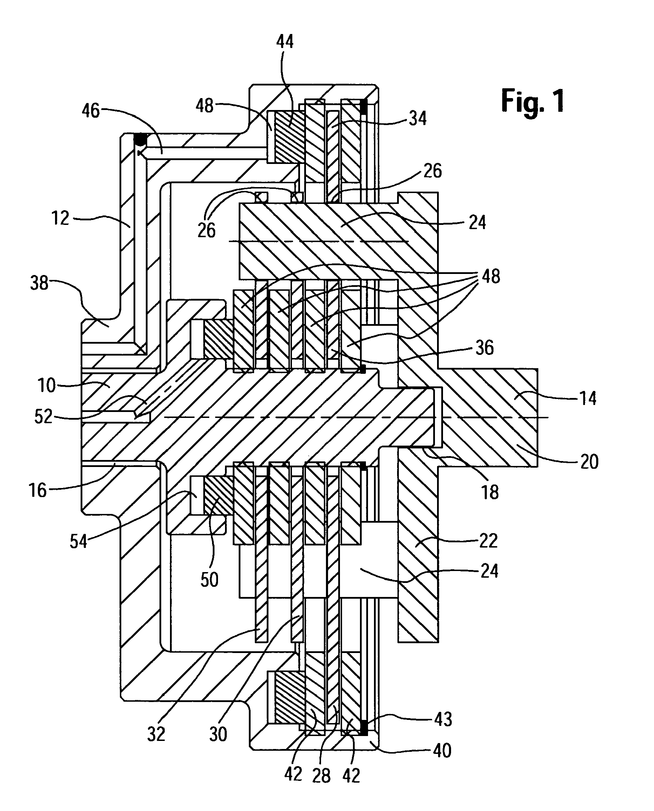

Die in Fig. 1 dargestellte Kupplungseinheit enthält als ein zweites Bauteil eine Welle 10, auf deren einem Ende eine als drittes Bauteil dienende Kupplungsglocke 12 und an deren anderem Ende ein als erstes Bauteil dienender Lamellenträger 14 drehbar gelagert sind. Die Lagerstelle 16 zwischen dem zweiten und dem dritten Bauteil 10, 12 sowie die Lagerstelle 18 zwischen dem zweiten und dem ersten Bauteil können als übliche Gleit-, Nadel oder Rollenlager ausgebildet sein, die eine Relativverdrehung der drei Bauteile 10, 12, 14 gegeneinander ermöglichen.

Der Lamellenträger 14 enthält eine Anschlusswelle 20, die ein flanschartiges Teil 22 trägt. An das flanschartige Teil 22 sind drei gleichmäßig auf dem Umfang verteilte, sich axial in die Kupplungsglocke 12 erstreckende, als Mitnehmer dienende Stege 24 angeformt, von denen zwei dargestellt sind. Die Stege 24 sind gemäß des dargestellten Ausführungsbeispiels als zylindrische Bolzen ausgebildet, können jedoch grundsätzlich auch andere Querschnittsformen aufweisen. Die Stege 24 erstrecken sich durch Kreisbohrungen 26, die in drei sich radial erstreckenden scheibenförmigen Lamellen 28, 30, 32 ausgebildet sind, so dass sich eine formschlüssige Verbindung zwischen dem Lamellenträger 14 und den drei Lamellen 28, 30, 32 ergibt, welche die Übertragung von Drehmomenten ermöglicht. Eine erste Lamelle 28 weist einen größeren Außendurchmesser auf als die beiden anderen, beiderseits der ersten Lamelle 28 angeordneten Lamellen 30, 32. Die drei Lamellen 28, 30, 32 lassen sich auf den Stegen 24 axial verschieben. Der radiale Bereich in Höhe der Stege 24, auf dem die drei Kreisbohrungen 22 liegen, unterteilt die erste Lamelle 28 in einen ringförmigen äußeren Kontaktbereich 34 und einen ringförmigen inneren Kontaktbereich 36.

Die Kupplungsglocke 12 ist topfförmig ausgebildet und enthält an einem axialen Ende einen Nabenbereich 38 und an dem andere axialen Ende einen Ringbereich 40. Innerhalb des Ringbereichs 40 sind zwei äußere Gegenlamellen 42 drehfest und axial verschiebbar angeordnet. Ein Sperrring 43 hält die äußeren Gegenlamellen 42 in der Kupplungsglocke 12. Die äußeren Gegenlamellen 42 besitzen ringförmige Kontaktbereiche, welche mit den beiderseitigen äußeren Kontaktbereichen 34 der Lamelle 28 korrespondiert. Die Lamelle 28 und die äußeren Gegenlamellen 42 sind Teil einer äußeren Kupplung, welche des Weiteren einen axial beweglichen Kupplungskolben 44 enthält. Wird Flüssigkeit, beispielsweise Hydrauliköl, durch einen Ölkanal 46 in den Kupplungsdruckraum 48 gefördert, so bewegt sich der Kupplungskolben 44 in axiale Richtung und drückt die erste Lamelle 28 und die beiden äußeren Gegenlamellen 42 aufeinander, wodurch ein Reibschluss gebildet wird und Drehmomente zwischen der Kupplungsglocke 12 und dem Lamellenträger 14 übertragbar sind.

Auf der Welle 10 sind vier innere Gegenlamellen 48 drehfest und axial verschiebbar angeordnet, die abwechselnd mit den drei von dem Lamellenträger 14 getragenen Lamellen 28, 30, 32 geschichtet angeordnet sind und ein Lamellenpaket bilden. Die inneren Gegenlamellen 48 besitzen ringförmige Kontaktbereiche, welche mit den inneren Kontaktbereichen 36 der Lamellen 28, 30, 32 korrespondiert. Die Lamellen 28, 30, 32 und die inneren Gegenlamellen 48 sind Teil einer radial inneren Kupplung, welche des Weiteren einen axial beweglichen Kupplungskolben 50 enthält. Wird Flüssigkeit, beispielsweise Hydrauliköl, durch einen Ölkanal 52 in den Kupplungsdruckraum 54 gefördert, so bewegt sich der Kupplungskolben 50 in axiale Richtung und drückt die Lamellen 28, 30, 32 und die vier inneren Gegenlamellen 48 aufeinander, wodurch ein Reibschluss gebildet wird und Drehmomente zwischen der Welle 10 und dem Lamellenträger 14 übertragbar sind.
Die drei in Fig. 1 gezeigten Bauteilen (Welle 10, Kupplungsglocke 12 und Lamellenträger 14) sind Bestandteile eines nicht näher gezeigten Gesamtgetriebes. Grundsätzlich kann jedes dieser Bauteile 10, 12, 14 innerhalb eines nicht gezeigten ruhenden Getriebegehäuses verdrehbar angeordnet sein, so dass die äußeren Kontaktbereiche 34 der Lamelle 28 mit den äußeren Gegenlamellen 42 sowie die inneren Kontaktbereiche 36 der Lamellen 28, 30, 32 mit den inneren Gegenlamellen 48 wie beschrieben je eine Kupplung bilden. Es ist jedoch auch möglich, dass eines der Bauteile 10, 12, 14 drehfest mit dem Getriebegehäuse verbunden ist. Beispielsweise kann die Kupplungsglocke 12 Teil des feststehenden Getriebegehäuses sein. Dann wirken die äußeren Kontaktbereiche 34 der Lamelle 28 mit den äußeren Gegenlamellen 42 als Bremse, durch welche sich der drehbare Lamellenträger 14 abbremsen lässt. Gleichzeitig kann durch Schließen der inneren Kupplung auch die Welle 10 mit abgebremst werden.

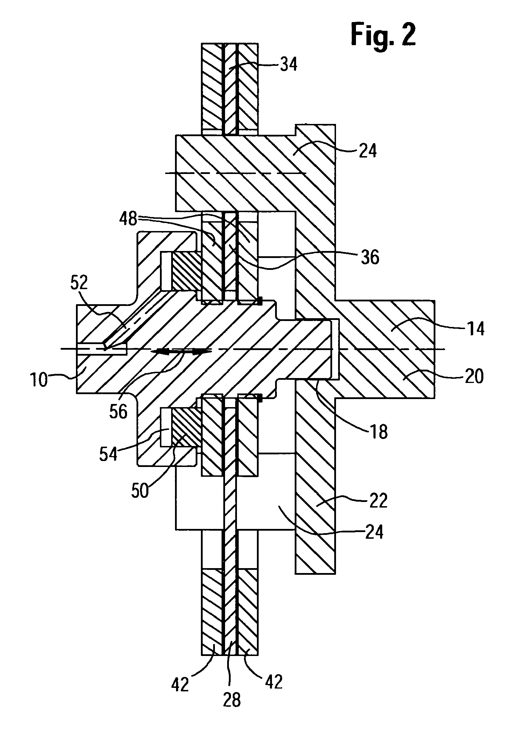

In Fig. 2 ist ein Teilbereich einer zweiten Ausgestaltung einer erfindungsgemäßen Kupplungseinheit dargestellt, die mit der Ausbildung gemäß Fig. 1 viele Übereinstimmungen aufweise und im Wesentlichen gleichartig wirkt, so dass für gleiche Bauteile die selben Bezugsziffern verwendet wurden. Die Ausbildung gemäß Fig. 2 unterscheidet sich von der in Fig. 1 dargestellten Ausbildung im Wesentlichen dadurch, dass gemäß Fig. 2 lediglich eine erste Lamelle 28 drehfest mit dem Lamellenträger 14 verbunden ist, deren äußerer Bereich mit zwei äußeren Gegenlamellen 42 zusammenwirkt, welche mit einer nicht gezeigten Kupplungsglocke drehfest verbunden sind, und dass der innere Bereich 36 der ersten Lamelle 28 mit lediglich zwei inneren Gegenlamellen 48, die drehfest mit der Welle 10 verbunden sind, zusammenwirkt. Der Doppelpfeil 56 deutet an, dass eine axiale Bewegung in beide Richtungen möglich ist.

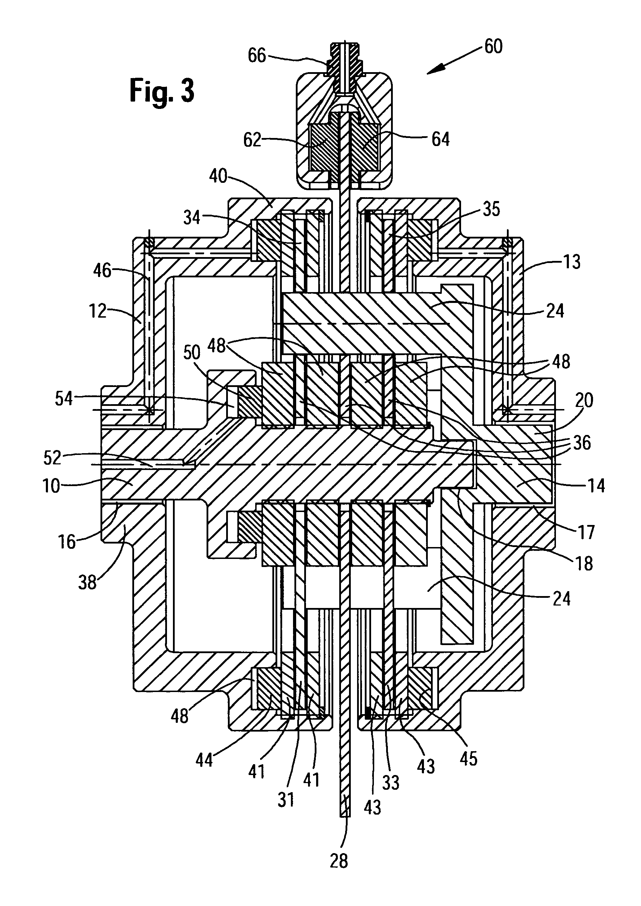

Auch in Fig. 3 wurde für gleichartige Bauteile dieselben Bezugszeichen wie in Fig. 1 verwendet. Gemäß Fig. 3 werden zwei Kupplungsglocken 12, 13 verwendet. Eine erste, linke Kupplungsglocke 12 ist mittels eines Lagers 16 drehbar auf der Welle 10 gelagert, die zweite, rechte Kupplungsglocke 13 ist mittels eines Lagers 17 drehbar auf der Anschlusswelle 20 des Lamellenträgers 14 gelagert. Mit dem Lamellenträger 14 sind über die Mitnehmer 24 eine mittlere Lamelle 28, eine linke Lamelle 31 und eine rechte Lamelle 33 drehfest verbunden.

Der äußere Durchmesser der mittleren Lamelle 28 ist größer als der Außendurchmesser der beiden Kupplungsglocken 12, 13, so dass sich die mittlere Lamelle 28 zwischen den beiden Kupplungsglocken 12, 13 nach Außen erstreckt. An dem außen vorstehenden Ringbereich der mittleren Lamelle 28 greift ein hydraulisch betätigbarer Bremssattel 60 an, der zwei Bremskolben 62, 64 enthält, die bei Flüssigkeitsdruckzufuhr über einen Hydraulikanschluss 66 beiderseits gegen äußere Ringbereiche der mittleren Lamelle 28 gedrückt werden, so dass die mittlere Lamelle 28 und mit ihr den Lamellenträger 14 abgebremst werden.

Die äußeren Kontaktbereiche 34 der linke Lamelle 31 wirken mit zwei drehfest in der linken Kupplungsglocke 12 angeordneten äußeren Gegenlamellen 41 zusammen, welche durch einen Kupplungskolben 44 in reibschlüssigen Eingriff gebracht werden können, so dass sich eine erste Kupplung ergibt. Die äußeren Kontaktbereiche 35 der rechte Lamelle 33 wirken mit zwei drehfest in der rechten Kupplungsglocke 13 angeordneten äußeren Gegenlamellen 43 zusammen, welche durch einen Kupplungskolben 45 in reibschlüssigen Eingriff gebracht werden können, so dass sich eine zweite Kupplung ergibt. Durch die erste bzw. die zweite Kupplung lassen sich wahlweise die linke Kupplungsglocke 12 und/oder die rechte Kupplungsglocke 13 drehfest mit dem Lamellenträger 14 verbinden.

Die inneren Kontaktbereiche 36 der mittleren Lamelle 28, der linken Lamelle 31 und der rechten Lamelle 33 wirken mit inneren Gegenlamellen 48 zusammen, die drehfest auf der Welle 10 angeordnet sind. Bei Druckbeaufschlagung des Kolbens 50 wird das Lamellenpaket bestehend aus der mittleren, der linken und der rechten Lamelle 28, 31, 33 sowie den vier inneren Gegenlamellen 48 zusammengedrückt, so dass sich eine kraftschlüssige Verbindung ergibt und die Welle 10 drehfest mit dem Lamellenträger 14 verbunden ist.

Die beiden Kupplungsglocken, die Welle 10 und die Anschlusswelle 20 des Lamellenträgers 14 können jeweils als Eingangs- oder Ausgangswellen der in Fig. 3 gezeigten Kupplungs-Bremseinheit dienen.

Auch wenn die Erfindung lediglich anhand weniger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen.

## Patentansprüche

1. Kupplungs- und/oder Bremseinheit mit wenigstens drei relativ zueinander verdrehbaren Bauteilen (10, 12, 13, 14), mit denen jeweils wenigstens eine Lamelle (28, 30, 31, 32, 33, 41, 42, 43, 48) drehfest verbunden ist, wobei die Lamellen (28, 30, 31, 32, 33, 41, 42, 43, 48) wahlweise miteinander in reibenden kraftschlüssigen Eingriff gebracht werden können, wobei mit einem ersten Bauteil (14) wenigstens eine erste Lamelle (28, 30, 31, 32, 33) drehfest verbunden ist, welche über wenigstens einen radial äußeren Reibbelag (34, 35) mit wenigstens einer zweiten drehfest mit einem zweiten Bauteil (12) verbundenen Lamelle (41, 42, 43) in reibenden Eingriff gebracht werden kann, **dadurch gekennzeichnet, dass** die erste Lamelle (28, 30, 31, 32, 33) weiterhin über wenigstens einen radial inneren Reibbelag (36) mit wenigstens einer dritten drehfest mit einem dritten Bauteil (10) verbundenen Lamelle (48) in reibenden Eingriff gebracht werden kann.

2. Kupplungs- und/oder Bremseinheit nach Anspruch 1, **dadurch gekennzeichnet, dass** wenigstens eine Lamelle (28, 30, 31, 32, 33, 41, 42, 43, 48) scheibenförmig ausgebildet ist.

3. Kupplungs- und/oder Bremseinheit nach Anspruch 1 oder 2, **dadurch gekennzeichnet, dass** mit wenigstens einem Bauteil (10, 12, 13, 14) ein Lamellenpaket verbunden ist, welches die jeweilige wenigstens eine Lamelle (28, 30, 31, 32, 33, 41, 42, 43, 48) umfasst.

4. Kupplungs- und/oder Bremseinheit nach einem der vorhergehenden Ansprüche, **dadurch gekennzeichnet, dass** der Reibeingriff zwischen der wenigstens einen ersten Lamelle (28, 30, 31, 32, 33) und der wenigstens einen zweiten Lamelle (41, 42, 43) und der Reibeingriff zwischen der wenigstens einen ersten Lamelle (28, 30, 31, 32, 33) und der wenigstens einen dritten Lamelle (48) durch mechanische, hydraulische, pneumatische oder elektrische Betätigung erfolgt.

5. Kupplungs- und/oder Bremseinheit nach einem der vorhergehenden Ansprüche, **dadurch gekennzeichnet, dass** die Lamellen (28, 30, 31, 32, 33, 41, 42, 43, 48) bzw. die Lamellenpakete mit Hilfe einer Scheibenkupplung geklemmt werden und ein Drehmoment übertragen.

6. Kupplungs- und/oder Bremseinheit nach einem der vorhergehenden Ansprüche, **dadurch gekennzeichnet, dass** das erste Bauteil ein Lamellenträger (14) mit wenigstens einem, vorzugsweise mit wenigstens zwei axial vorstehenden Stegen (24), die in entsprechende Ausnehmungen (26) der wenigstens einen ersten Lamelle(28, 30, 31, 32, 33) eingreifen, ist, und dass vorzugsweise die Stege (24) im wesentlichen zylindrisch ausgebildet sind und in Kreisöffnungen der wenigstens einen ersten Lamelle (28, 30, 31, 32, 33) eingreifen.

7. Kupplungs- und/oder Bremseinheit nach Anspruch 6, **dadurch gekennzeichnet, dass** der wenigstens eine radial äußere Reibbelag (33, 34, 35) radial außerhalb der Stege (24) und der wenigstens eine radial innere Reibbelag (36) radial innerhalb der Stege (24) liegen.

8. Kupplungs- und/oder Bremseinheit nach einem der vorhergehenden Ansprüche, **dadurch gekennzeichnet, dass** wenigstens eine Lamelle (28, 30, 31, 32, 33, 41, 42, 43, 48) bezüglich des sie tragenden Bauteils (10, 12, 14) axial verschiebbar ist und/oder dass wenigstens eine Lamelle (28) mit einem Bremssattel (60) zusammenwirkt.

9. Kupplungs- und/oder Bremseinheit nach einem der vorhergehenden Ansprüche, **dadurch gekennzeichnet, dass** die wenigstens eine erste Lamelle (28, 30, 31, 32, 33) ohne Reibbelag und die wenigstens eine zweite und dritte Gegenlamelle (41, 42, 43, 48) mit Reibbelägen ausgebildet sind und/oder dass die wenigstens eine erste Lamelle (28, 30, 31, 32, 33) mit einem durchgehenden Reibbelag ausgeführt ist.

10. Kupplungs- und/oder Bremseinheit nach einem der vorhergehenden Ansprüche, **dadurch gekennzeichnet, dass** Bereiche mit unterschiedlichen Reibbelägen vorgesehen sind und dass vorzugsweise die Bereiche unterschiedlicher Reibbeläge konzentrisch zueinander angeordnet sind.

## Claims

1. Clutch and/or brake unit having at least three components (10, 12, 13, 14) which are rotatable relative to one another and to which in each case at least one lamella (28, 30, 31, 32, 33, 41, 42, 43, 48) is rotationally fixedly connected, with it being possible for the lamellae (28, 30, 31, 32, 33, 41, 42, 43, 48) to selectively be placed in frictionally-locking frictional engagement with one another, with at least one first lamella (28, 30, 31, 32, 33) being rotationally fixedly connected to a first component (14), which first lamella (28, 30, 31, 32, 33) can be placed in frictional engagement by means of at least one radially outer friction lining (34, 35) with at least one second lamella (41, 42, 43) which is rotationally fixedly connected to a second component (12), **characterized in that** the first lamella (28, 30, 31, 32, 33) can also be placed in frictional engagement by means of at least one radially inner friction lining (36) with at least one third lamella (48) which is rotationally fixedly connected to a third component (10).

2. Clutch and/or brake unit according to Claim 1, **characterized in that** at least one lamella (28, 30, 31, 32, 33, 41, 42, 43, 48) is of disc-shaped design.

3. Clutch and/or brake unit according to Claim 1 or 2, **characterized in that** a lamellae pack which comprises the respective at least one lamella (28, 30, 31, 32, 33, 41, 42, 43, 48) is connected to at least one component (10, 12, 13, 14).

4. Clutch and/or brake unit according to one of the preceding claims, **characterized in that** the frictional engagement between the at least one first lamella (28, 30, 31, 32, 33) and the at least one second lamella (41, 42, 43) and the frictional engagement between the at least one first lamella (28, 30, 31, 32, 33) and the at least one third lamella (48) takes place by means of mechanical, hydraulic, pneumatic or electrical actuation.

5. Clutch and/or brake unit according to one of the preceding claims, **characterized in that** the lamellae (28, 30, 31, 32, 33, 41, 42, 43, 48) or the lamellae packs are clamped by means of a disc clutch and transmit a torque.

6. Clutch and/or brake unit according to one of the preceding claims, **characterized in that** the first component is a lamella carrier (14) with at least one, preferably with at least two axially projecting webs (24) which engage into corresponding recesses (26) of the at least one first lamella (28, 30, 31, 32, 33), and **in that** the webs (24) are preferably of substantially cylindrical design and engage into circular openings of the at least one first lamella (28, 30, 31, 32, 33).

7. Clutch and/or brake unit according to Claim 6, **characterized in that** the at least one radially outer friction lining (33, 34, 35) is situated radially outside the webs (24) and the at least one radially inner friction lining (36) is situated radially within the webs (24).

8. Clutch and/or brake unit according to one of the preceding claims, **characterized in that** at least one lamella (28, 30, 31, 32, 33, 41, 42, 43, 48) is axially movable with respect to the component (10, 12, 14) which carries it, and/or **in that** at least one lamella (28) interacts with a brake caliper (60).

9. Clutch and/or brake unit according to one of the preceding claims, **characterized in that** the at least one first lamella (28, 30, 31, 32, 33) is formed without a friction lining and the at least one second and third mating lamellae (41, 42, 43, 48) are formed with friction linings, and/or **in that** the at least one first lamella (28, 30, 31, 32, 33) is formed with a continuous friction lining.

10. Clutch and/or brake unit according to one of the preceding claims, **characterized in that** regions with different friction linings are provided, and **in that** the regions of different friction linings are preferably arranged concentrically with respect to one another.

## Revendications

1. Unité d'embrayage et/ou de frein comportant au moins trois éléments (10, 12, 13, 14), qui sont aptes à tourner les uns par rapport aux autres et à chacun desquels est assemblée de manière solidaire en rotation au moins une lamelle (28, 30, 31, 32, 33, 41, 42, 43, 48), les lamelles (28, 30, 31, 32, 33, 41, 42, 43, 48) pouvant être amenées au choix en prise entre elles par un assemblage à force et friction, sachant qu'au moins une première lamelle (28, 30, 31, 32, 33) est assemblée de manière solidaire en rotation à un premier élément (14), laquelle lamelle peut être amenée en prise avec friction avec au moins une deuxième lamelle (41, 42, 43), assemblée de manière solidaire en rotation avec un deuxième élément (12), **caractérisée en ce que**, par l'intermédiaire d'au moins une garniture de friction (36) radialement intérieure, la première lamelle (28, 30, 31, 32, 33) peut être amenée en prise avec friction avec au moins une troisième lamelle (48), assemblée de manière solidaire en rotation avec un troisième élément (10).

2. Unité d'embrayage et/ou de frein selon la revendication 1, **caractérisée en ce qu'**au moins une lamelle (28, 30, 31, 32, 33, 41, 42, 43, 48) est réalisée en forme de disque.

3. Unité d'embrayage et/ou de frein selon la revendication 1 ou 2, **caractérisée en ce qu'**un paquet de lamelles, qui comporte au moins une lamelle (28, 30, 31, 32, 33, 41, 42, 43, 48), est assemblé avec au moins un élément (10, 12, 13, 14).

4. Unité d'embrayage et/ou de frein selon l'une quelconque des revendications précédentes, **caractérisée en ce que** la prise avec friction entre au moins une première lamelle (28, 30, 31, 32, 33) et au moins une deuxième lamelle (41, 42, 43) et la prise avec friction entre au moins une première lamelle (28, 30, 31, 32, 33) et au moins une troisième lamelle (48) sont effectuées par un actionnement mécanique, hydraulique, pneumatique ou électrique.

5. Unité d'embrayage et/ou de frein selon l'une quelconque des revendications précédentes, **caractérisée en ce que** les lamelles (28, 30, 31, 32, 33, 41, 42, 43, 48), plus précisément le paquet de lamelles, sont serrées au moyen d'un couplage à disques et transmettent un couple de rotation.

6. Unité d'embrayage et/ou de frein selon l'une quelconque des revendications précédentes, **caractérisée en ce que** le premier élément est un porte-lamelles (14) avec au moins un bras (24), de préférence avec au moins deux bras (24) en saillie dans le sens axial, qui s'engagent dans des évidements (26) correspondants d'au moins une première lamelle (28, 30, 31, 32, 33), et **en ce que** de préférence les bras (24) sont sensiblement cylindriques et s'engagent dans des ouvertures circulaires d'au moins une première lamelle (28, 30, 31, 32, 33).

7. Unité d'embrayage et/ou de frein selon la revendication 6, **caractérisée en ce qu'**au moins une garniture de friction (33, 34, 35) radialement extérieure se situe dans le sens radial à l'extérieur des bras (24), et au moins une garniture de friction (36) radialement intérieure se situe dans le sens radial à l'intérieur des bras (24).

8. Unité d'embrayage et/ou de frein selon l'une quelconque des revendications précédentes, **caractérisée en ce qu'**au moins une lamelle (28, 30, 31, 32, 33, 41, 42, 43, 48) peut être déplacée dans le sens axial par rapport à l'élément (10, 12, 14) la portant et/ou **en ce qu'**au moins une lamelle (28) coopère avec un étrier de frein (60).

9. Unité d'embrayage et/ou de frein selon l'une quelconque des revendications précédentes, **caractérisée en ce qu'**au moins une première lamelle (28, 30, 31, 32, 33) est réalisée sans garniture de friction et au moins une deuxième lamelle (41, 42, 43) et la troisième lamelle (48) sont réalisées avec des garnitures de friction et/ou **en ce qu'**au moins une première lamelle (28, 30, 31, 32, 33) est réalisée avec une garniture de friction continue.

10. Unité d'embrayage et/ou de frein selon l'une quelconque des revendications précédentes, **caractérisée en ce qu'**il est prévu des zones avec des garnitures de friction différentes et **en ce que**, de préférence, les zones avec des garnitures de friction différentes sont disposées concentriquement les unes aux autres.
